# EUROPEAN PATENT SPECIFICATION

(11) **EP 2 839 912 B1**
(45) Date of publication and mention of the grant of the patent: **02.05.2018**
(21) Application number: 13181226.5
(22) Date of filing: 21.08.2013
(51) Int. Cl.: B23D 57/00, B28D 5/04

(54) **Wire saw device with sensor arrangement and method for monitoring the operation of the wire saw device**
Drahtsägenvorrichtung mit Sensoranordnung und Verfahren zur Überwachung des Betriebs der Drahtsägenvorrichtung
Dispositif de scie à fil avec système de capteur et procédé permettant de surveiller le fonctionnement du dispositif de scie à fil

(43) Date of publication of application: 25.02.2015
(73) Proprietor: Toyo Advanced Technologies Co., Ltd., Minami-ku Hiroshima, 734-8501 (JP)
(72) Inventor: Zominy, Claude, 74350 Copponex (FR); Billod, Mathieu, 74160 Présilly (FR)
(74) Representative: advotec.

(56) References cited:
- EP-A2- 0 745 464
- EP-A2- 1 068 920
- JP-A- H11 300 595
- US-A1- 2010 089 377

## Description

### TECHNICAL FIELD OF THE INVENTION

The present invention relates to a wire saw device according to the preamble of claim 1 with a sensor arrangement for monitoring the operation of the wire saw, and to a method for measuring the operation condition of a wire saw device according to the preamble of claim 10.

### BACKGROUND OF THE INVENTION

Such a device and such a method are known from JP3841544B2. Wire saws are used for cutting blocks or bricks, thin slices, e.g., semiconductor wafers, from a piece of hard material such as silicon. For instance, workpieces or ingots are cut or wafered using wire saws for cropping, squaring, or slicing. In such wire saws, the wire is wound on two spools. One spool is used for the new wire and for feeding the wire to the cutting area. A second spool is present in a wire saw device for the used wire and for taking up the wire coming from the cutting area. The wire coming from the feeding spool is guided by wire guides to the cutting area, where the wire cuts through the respective workpiece, for instance so as to form thin slices. After the cutting process, the wire is again guided by wire guides. The wire is the led to the take up spool, on which the used wire is wound.

During the unwinding process the position at which the wire leaves the spool varies along the axial direction as the wire is unwound layer by layer from the spool. The wire moves alternating from one side of the spool to the other side of the spool, i.e., flange to flange. Therefore, the wire is arranged on the spool in a regular manner by a travel unit during winding and un-winding of the wire. The travel unit moves the wire transversal to the spool's axis.

However, irregularities during the cutting process, or during the (un-) winding process, like friction on the spool, oscillations, twisting of the wire, wrong operation settings, a malfunctioning travel unit or the like, may lead to a wire break. If the wire breaks, the machine is stopped, the wire saw has to be repaired, and the machine has to be reset before being ready for operation again. The interruption of the cutting process and the time needed for a new setting of the wire saw impact the productivity of the wire saw.

In view of the above, it is an object of the present invention to provide a wire saw and a method for operating a wire saw that overcomes at least some of the problems in the art.

### SUMMARY OF THE INVENTION

In light of the above, a wire saw device according to claim 1, a method for measuring an operation condition of a wire saw according to claim 10 and a method for operating a wire saw device according to claim 13 are provided. Further preferred embodiments are defined by the features of dependent claims 2-9, 11 and 12.

### BRIEF DESCRIPTION OF THE DRAWINGS

So that the manner in which the above recited features of the present invention can be understood in detail, a more particular description of the invention, briefly summarized above, may be had by reference to embodiments. The accompanying drawings relate to embodiments of the invention and are described in the following:
- Fig. 1: shows a schematic drawing of a wire saw in which the wire saw device according to the invention may be used;
- Fig. 2: shows a schematic side view of a wire saw device according to the invention and a spool for a wire saw device;
- Fig. 3: shows a schematic front view of the wire saw device shown in Fig. 2;
- Fig. 4: shows a schematic side view of a wire saw device according to the invention and a spool mounted to the wire saw device;
- Fig. 5: shows a schematic front view of the wire saw device shown in Fig. 4;
- Fig. 6: shows a schematic side view of a wire saw device according to the invention and a spool mounted to the wire saw device;
- Fig. 7: shows a schematic side view of a spool arrangement including a sensor arrangement according to the invention;
- Fig. 8: ; shows a schematic side view of a wire saw device according to the invention and a spool mounted to the wire saw device;
- Fig. 9: shows a schematic side view of a spool arrangement including a sensor arrangement according to the invention;
- Fig. 10: shows a schematic side view of a spool arrangement including a sensor arrangement according to the invention;
- Fig. 11: shows a schematic drawing of a wire saw device according to the invention;
- Fig. 12: shows a schematic side view of a wire saw device according to the invention and a spool mounted to the wire saw device;
- Fig. 13: shows a schematic front view of the wire saw device shown in Fig. 12;
- Fig. 14: shows a schematic side view of a wire saw device according to the invention;
- Fig. 15: shows a flow chart of a method for measuring an operation condition of a wire saw device according to the invention;
- Fig. 16: shows a flow chart of a method for measuring an operation condition of a wire saw device according to the invention;
- Fig. 17: shows a flow chart of a method for operating a wire saw device according to the invention.

### DETAILED DESCRIPTION OF EMBODIMENTS

Reference will now be made in detail to the various embodiments of the invention, one or more examples of which are illustrated in the figures. Within the following description of the drawings, the same reference numbers refer to same components. Generally, only the differences with respect to individual embodiments are described. Each example is provided by way of explanation of the invention as defined by the claims and is not meant as a limitation.

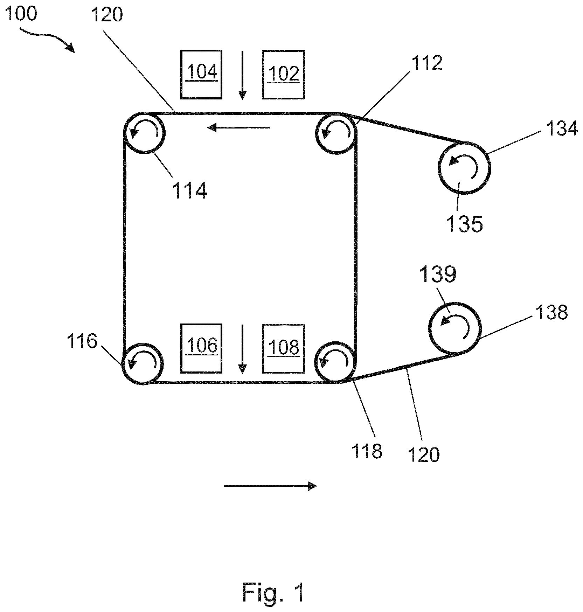

Fig. 1 shows a schematic side view of a wire saw 100, in which a wire saw device according to the invention is used. The wire saw 100 includes, as an example, four wire guides 112, 114, 116, and 118. Each wire guide 112, 114, 116, 118 may be connected to a motor or drive (not shown) for rotating the wire guide. A wire 120 is guided substantially in the direction of the straight arrows shown beside the wire 120 from a feeding spool 134 to a take up spool 138. The wire 120 being shown in a side view in Fig. 1 may also contain a plurality of wires forming a wire web in one embodiment.

According to the invention, the wire saw includes a wire saw device as described in detail below. The wire saw device as referred to herein may be used as a part of a wire saw including further components (like the above mentioned wire guides, a motor, a control unit and the like), as a part of a wire saw system including components for cutting the ingots by a wire web, as a part of one or more wire saws being arranged in one sawing system, or may be used as a wire saw itself. According to some embodiments, the wire saw device includes a spool reception arrangement for receiving a spool, such as the above mentioned feeding spool or take up spool. The spool to be mounted to a spool reception arrangement may provide one flange at each end of the spool (such as flange 135 of feeding spool 134 and flange 139 of the take up spool 138 as can be seen in the side view of the wire saw of Fig. 1). For instance, the wire saw may have a housing (not shown in Fig. 1) to which the spool reception arrangement is mounted. The wire saw device possibly used in the wire saw 100 includes a sensor arrangement for measuring the operation condition of the spool flange or the spool flanges, as will be explained in detail below. For instance, the sensor arrangement may be arranged, placed or moved close to the spool flange.

During a cutting action of the wire saw 100, one or more ingots 102, 104, 106, 108 may be pushed through the wire web in order to slice it or them. This is indicated by the arrows sandwiched between ingots 102, 104, and 106, 108, respectively. The one or more ingots may be supported by a table (not shown). Alternatively, the ingots 102, 104, 106, 108 may be stationary while the wire or the wire web is pushed through it. According to embodiments, each of the one or more ingots is sliced into a multitude of wafers, such as at least 500 or even more. Typical lengths of the ingots may be in the range of up to 250 mm, in particular in the case of multi-crystalline Silicon, and up to 500 mm, in particular in case of mono-crystalline Silicon.

The example of a wire feed spool 134 shown in Fig. 1 is provided with a wire reservoir. The wire feed spool 134, if still complete, may hold the length of several hundred kilometers of wire. During operation of the wire saw, the wire is fed for the sawing process by the wire feed spool 134 to the wire guides 112, 114, 116, 118. A wire take-up spool 138 may be provided on which the used wire 120 is recoiled. Typically, further devices such as low inertia pulleys (not shown) and tension arms (not shown), for wire tension regulation with optional digital coders on the tension arms, may be provided.

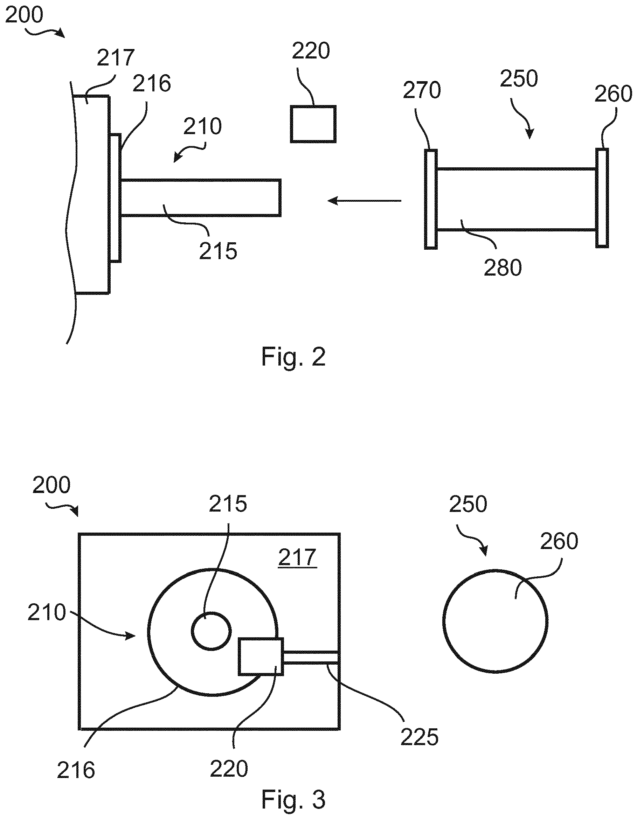

Fig. 2 shows an embodiment of a wire saw device which may, for instance, be used in a wire saw as exemplarily described above. However, the wire saw device as described herein is not limited to a wire saw as shown in Fig. 2 but may be used in other types of wire saws, too.

Fig. 2 shows a wire saw device 200 according to an embodiment. The wire saw device includes a spool reception arrangement 210. According to the invention, the spool reception arrangement is adapted for receiving a spool or a wire guide in a wire saw device. In particular, the spool reception arrangement may be adapted for supporting a spool in a wire saw device, such as during operation of the wire saw device. For this purpose, the spool reception arrangement may include one or more supporting surfaces or areas, one or more locking elements for fixing the spool, a motor for rotating the spool, and/or further elements for reliably holding a spool during operation. In the example shown in Fig. 2, the spool reception arrangement 210 includes a spool receiving portion 215 and a bearing 216. The spool reception arrangement 210 of the wire saw device according to the invention may be adapted for being mounted to a wire saw housing 217. The spool receiving portion 215 is exemplarily formed like a bolt or a spike. The spool receiving portion 215 may include a surface supporting the spool.

According to some embodiments, the spool receiving portion 215 may be able to support a spool, such as spool 250 shown at the right side of Fig. 2, and is not limited to the shape shown in Fig. 2. Rather, the spool receiving portion 215 may have any shape and position, which enables a reliable support of the spool during the operation of the wire saw. According to some embodiments, the spool receiving portion 215 may be connected to a driving device (not shown) in order to rotate and, thus, rotate the spool mounted to it. The ability of the spool receiving portion 215 to support and hold a spool during operation of the wire saw is indicated in Fig. 2 with an arrow running from the spool 250 to the spool reception arrangement 210.

The spool 250, which may be mounted to the spool reception 210 of the wire saw device 200 may include a spool body 280. The spool body 280 may be adapted for housing a wire wound on the spool 250. According to some embodiments, the spool body 280 may be substantially cylindrical. The spool 250 further includes a spool flange at each end of the spool, which can be seen as flanges 260 and 270 in Fig. 2.

According to the invention, the wire saw device 200 includes a sensor arrangement 220 for measuring the operation condition of at least one of the spool flanges 260, 270 of the spool 250 to be mounted on the spool reception 210.

Fig. 3 is a front view of the wire saw device 200 shown in Fig. 2. In Fig. 3, the wire saw device 200 having a spool reception 210 including a bearing 216 can be seen. The spool reception 210 is mounted to a machine body 217 of the wire saw. The wire saw device 200 further includes the sensor arrangement 220 being mounted to an arm 225. The front view of the spool shown at the right side of Fig. 3 shows the flange 260 of the spool 250.

With the wire saw device according to the invention it is possible to provide an automatic measurement of the operating condition of the spool flanges and the spool stroke. The sensor arrangement used in a wire saw device according to the invention is able to measure the operating condition of the spool, such as the distance between a spool flange and a surface of the spool reception (or the machine body), the distance between two flanges of a spool, the shape of a flange, the deformation of a flange and the like.

As used herein, the term "measuring a deformation" of a component may stand for measuring the shape of the component and detecting whether the shape is in an expected condition or whether the shape of the component deviates from the original shape.

As mentioned above, friction of the wire at one of the wire saw components may be a cause of wire breakage, and, thus, the cause for a reduced productivity and reduced system reliability. It has been found by the inventors that one of the reasons for the wire breakage are the friction of the wire against the spool flanges, and/or a situation, where the wire is pinched (or blocked) between the flange and the volume of the wire wound on the spool. There are several reasons for the friction of the wire against the spool flanges or for the wire to be blocked. For instance, the stroke of the travel unit guiding the wire from and to the spool has to be adjusted to exactly fit the spool position. Until now, adjusting the stroke of the travel unit has been performed by measuring the position of the spool flanges and the distance between the spool flanges manually, and the obtained parameters have then been set as parameters in the man-machine-interface (MMI) of the wire saw. With the knowledge of the distances, the wire may correctly be positioned on the spool by the travel unit. Thereby, the object is to use as much space on the spool (which means going close to the flanges of the spool) whilst avoiding friction and blocking of the wire against the spool flanges.

In known wire saw systems, the distances are manually measured, in particular every time, a new spool is loaded on the wire saw. However, measurement errors or forgetting to perform the new setting of the parameters is a potential cause for wire breakage. Usually, in known systems, the distances are re-measured and adjusted after a certain time period. Also, the operation of the wire saw has to be stopped for the manual measurement, which decreases the productivity.

By using a wire saw device according to the invention, the measurement of the spool flange distances and shape may be made in an automatic and reliable manner. The sensor arrangement in the wire saw device according to the invention allows for a contactless measurement of the spool flange distances and the flange shape (such as for detecting a deformation). A measurement of the respective parameters during the operation of the wire saw or during a slow-down phase during the operation of the wire saw is possible by using the sensor arrangement as described herein.

Also, the automatic measurement may be performed in a predetermined or selectable time interval. Thus, the measurement can be performed more often and does not have to wait until a spool is exchanged. The productivity may be increased because the operation does not have to be interrupted for the contactless measurement of the parameters. Further, the reliability increases as the risk is diminished to forget a measurement or make measurement errors due to false handling of the measurement instruments or other measurement errors.

Apart from the above described desirable effects, the wire saw device according to the invention also avoids further problems of systems known in the art (such as sliding spools, wrong type of spool installed and the like) or at least overcomes the effects of problems with the known systems.

For instance, in known systems, the spool flanges may be damaged during handling operations, such as delivery to the wire saw and the like, due to the weight of the spools. Any shock of the spool on the floor may deform the flanges, in particular the borders of the flanges. In the case that the border of a flange is deformed, there friction may occur between the wire and the damaged flange, despite correctly measured distances of the spool flanges. The damaged flange and the resulting friction of the wire against the damaged flange border may result in wire breakage.

Another example of the problems with known systems is the high spool weight. Some spools may have a weight in the range of about 60 kg to about 80 kg. Under the pressure and the weight of the wire, the internal distance between the two spool flanges varies over the time. In the case that the spool is a feeding spool, the distance between the flanges decreases when the wire is consumed and unwound from the spool. In the case that the spool is a take up spool, the distance between the flanges increases the more wire is wound on the spool. Thus, an adjustment of the travel unit according to the varying flange distances during operation is desirable.

With the wire saw device according to the invention, the spool flange deformation as well as the changing flange distance may be measured. In the case of a deformed spool flange, the reliability of the automatic measurement improves the system performance. In case of a changing flange distance, the contactless measurement of the distance during the operation ensures a correct operation of the wire saw.

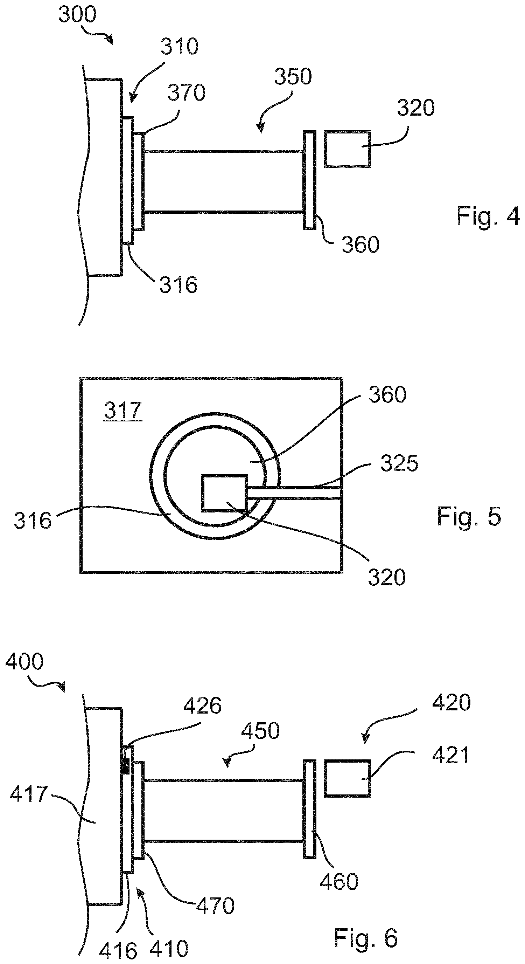

Fig. 4 shows an embodiment of a wire saw device 300 with a spool 350 being mounted to the spool reception 310. The bearing 316 of the spool reception arrangement 310 can be seen in Fig. 4, whereas the spool receiving portion as shown in Fig. 2 cannot be seen in Fig. 4. The flanges 360 and 370 of the spool 350 are also shown in Fig. 4. The wire saw device 300 includes a sensor arrangement 320 adapted for measuring the operation condition of at least one of the flanges of the spool.

Fig. 5 shows a front view of the wire saw device 320 shown in Fig. 4. With the sensor arrangement 320 being located in front of the spool flange 360, the deformation of the flange 360 may be measured. In one embodiment, the flange 360 is rotated in front of the sensor arrangement 320 while the sensor arrangement 320 measures the deformation of the flange 360. If a deformation of a flange (e.g. generated by a shock or the like) is detected by sensor arrangement 320, an alarm may be generated. In that way, the spool may be exchanged or the parameters for winding or unwinding the wire from the spool may be set accordingly, so that a wire breakage is prevented.

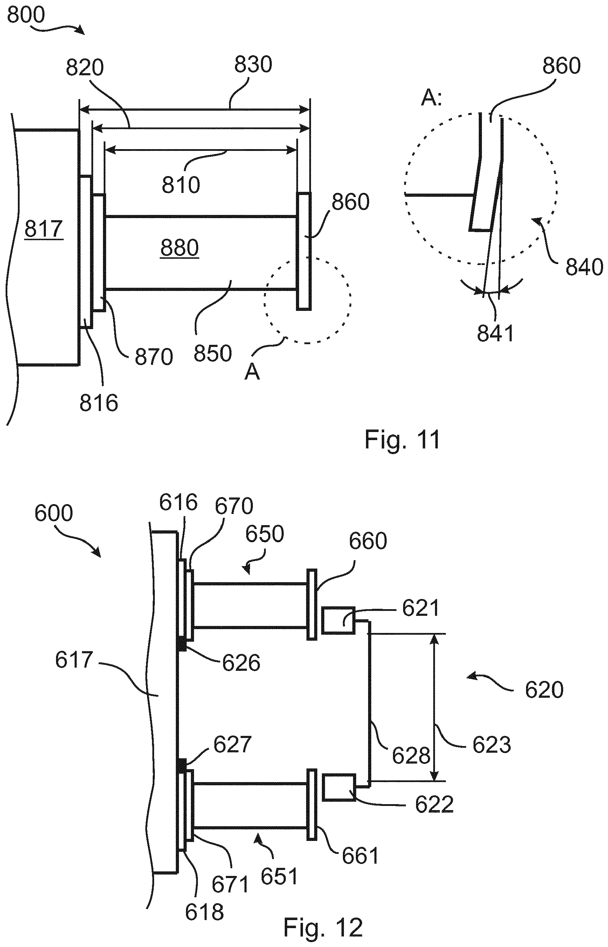

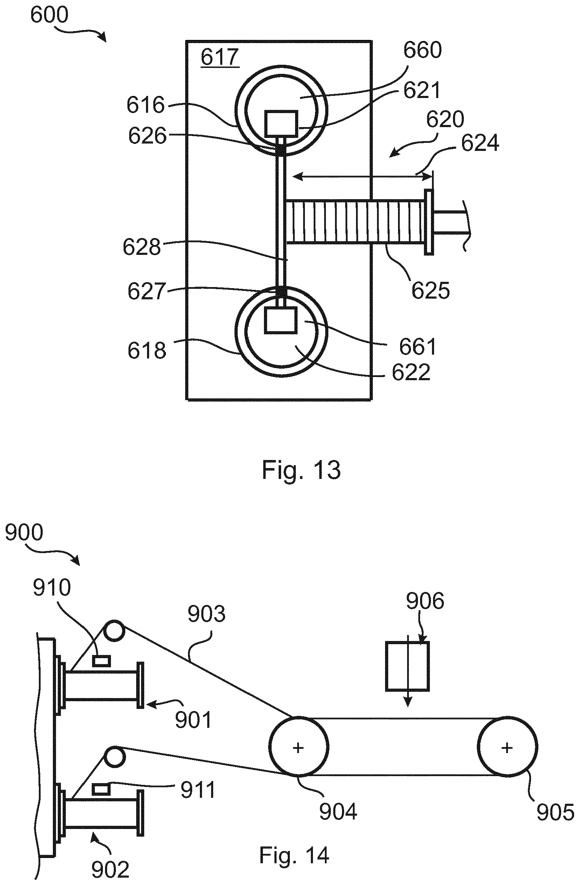

According to some embodiments, which may be combined with other embodiments the sensor arrangement 320 is provided on a moving unit 325, which may be adapted to move at least a part of the sensor arrangement 320 close to and from the spool flange, whose operation condition is to be measured. In one embodiment, the moving unit may be a retractable arm, as will be explained in detail below with respect to Figs. 12 and 13.

According to some embodiments, which may be combined with other embodiments the wire saw device as shown in Fig. 5 may also be equipped with a second sensor arrangement for flange 370. With the two sensor arrangements being located in front of the spool flanges (such as spool flanges 360 and 370 of Fig. 5), the deformation of the spool flanges may be measured. In one embodiment, both flanges are rotated in front of the sensor arrangements while the sensor arrangements measure the deformation of the flange 360. If a deformation of a flange (e.g. generated by a shock or the like) is detected by one or both of the sensor arrangements, an alarm may be generated. The spool may then be exchanged or the parameters for winding or unwinding the wire from the spool may be set accordingly, so that a wire breakage is prevented.

Fig. 6 shows an embodiment of a wire saw device 400. The wire saw device 400 includes a spool reception arrangement 410, of which only the bearing 416 can be seen in Fig. 6, because the wire saw device 400 is shown with a spool 450 mounted to it. At the ends of the spool 450, flanges 460 and 470 are provided. In the embodiment shown in Fig. 6, the sensor arrangement 420 includes a sensor 421 and a reference sensor 426. According to some embodiments, one sensor 421 of the sensor arrangement 420 is located close to the flange 460, while the reference sensor 426 is located close to the other flange 470 of the spool 450. The distance between a sensor and a flange (which may be denoted as being "close" in some embodiments described herein) may be in the range of typically between about 1 mm and about 50 mm, more typically between about 1 mm and about 20 mm and even more typically between about 1 mm and about 10mm. In one embodiment, the reference sensor is placed at a surface of housing 417. According to some embodiments, the reference sensor may be placed at a surface of the bearing of the spool reception arrangement 410. In particular, the reference sensor may be placed at a surface of the housing or the spool reception arrangement 410 being substantially parallel to the flanges of the spool.

The term "substantially" as used herein may mean that there may be a certain deviation from the characteristic denoted with "substantially." For instance, the term "substantially parallel" refers to an arrangement which may have certain deviations from the exact parallel arrangement of two elements, such as a deviation of about 1° to about 10° from the exact parallel arrangement. According to a further example, the term "substantially perpendicular" may refer to an arrangement of elements which are substantially placed in a 90° arrangement to each other. Typically, the term "substantially symmetrical" may also mean that the elements are not exactly arranged perpendicularly, but may deviate from the perpendicular arrangement to some extent, e.g. to some degrees from the exact 90° position, such as 1° to about 10°.

According to some embodiments, which may be combined with other embodiments the sensors described herein may be distance sensors or proximity sensors, such as, inductive sensors, capacitive sensors, laser sensors, or any type of distance sensor or proximity sensor being able to determine the distance between the sensor and a spool flange. The sensor in embodiments of a wire saw described herein may be connected to a control unit of the wire saw. The measurement of the sensor may be automatic and the obtained values may automatically be loaded in the right parameters stored in the control unit. The sensors may for instance be equipped with a signal line transferring the measured parameters (such as the distance to the flange) to the control unit, where the parameters may accordingly be processed. For instance, the parameters obtained by the sensors are used to check, whether the spool is in a correct operation condition. The correct operation condition may depend on the shape of the spool (with/without deformation, type of spool etc.), the distance of the flange to the spool reception, or the distance of the flanges to one another. The parameters may also be used to cause an alert in the case that the parameters indicate that the spool is not in a correct operation condition. Further, the parameters may be used to calculate further operational parameters of the wire saw, such as parameters required for operating the travel unit, the guiding rolls of the wire saw, the location of the workpiece to be sawed and the like. For instance, the distances of the flanges may be automatically monitored and controlled and the flange distance changes due to wire weight and wire pressure may be detected so as to adjust the travel unit stroke accordingly.

For measuring a desired parameter in the embodiment of a wire saw device as shown in Fig. 6, the sensor 421 being located close to the flange 460 of the spool 450 may measure the distance between the sensor and the spool flange. The reference sensor 426 may measure the distance between the sensor 426 and the flange 470 of the spool 450. By comparing the values delivered by the sensor, the distance between the flanges of the spool or between one flange and the spool reception (or the spool reception bearing or the machine housing) can be derived. In one embodiment, the sensor 421 measures the distance between the sensor 421 and the spool flange 460 over the whole circumference of the flange so as to detect possible flange deformations. The same may be performed by reference sensor 426 and flange 470.

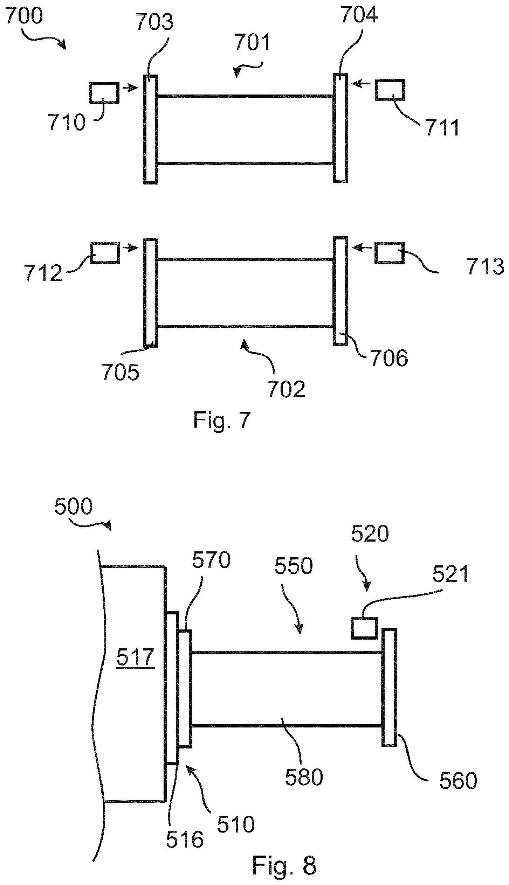

Fig. 7 shows an embodiment of a spool arrangement 700 and a sensor arrangement. The spool arrangement 700 may include two spools 701 and 702, which may be mounted to a spool reception arrangement as described above. The spool arrangement 700 including two spools 701 and 702 and the sensor arrangement may be part of a wire saw device during operation as described herein. The spools 701, 702 each include two flanges 703, 704, and 705, 706. The sensor arrangement includes four sensors 710, 711, 712, and 713. In particular, sensor 710 is provided and adapted for measuring the external distance to flange 703, sensor 711 is provided and adapted for measuring the external distance to flange 704, sensor 712 is provided and adapted for measuring the external distance to flange 705, and sensor 713 is provided and adapted for measuring the external distance to flange 706.

The sensor arrangement shown in Fig. 7 may be a sensor arrangement including sensors as described above, such as distance sensors or the like. Further, although shown in an embodiment with two spools, the sensor arrangement and/or sensors described in Fig. 7 may be used in other configurations, too, such as configurations for measuring only one spool or more than two spools.

The term "external distance" used herein refers to a distance to a flange measured from a reference point outside the spool, or the spool body. For instance, the sensors 710, 711, 712, and 713 measure the distance from the sensors to the flanges 703, 704, 705, and 706 at the outside side of the flange, i.e. the side of the flange, which is directed away from the spool body and does not face the spool body.

Fig. 8 shows a wire saw device 500 according to embodiments described herein. The wire saw device 500 includes a spool reception arrangement 510, of which only the bearing 516 can be seen in Fig. 8, because the wire saw device 500 is shown with a spool 550 mounted to it. At the ends of the spool 550, flanges 560 and 570 are provided. As can be seen in Fig. 8, the sensor arrangement 520 includes one sensor 521 for measuring the distance between the flanges 560 and 570 of the spool 550. In the embodiments shown in Fig. 8, the sensor 521 may be a laser sensor. According to some embodiments, the sensor arrangement 520 may include components for distance measurement by laser, such as a laser generating device, a camera, a photodiode, or a CCD device for detecting the laser beam so as to determine the distance.

Although the sensor 521 is only shown located at flange 560, the laser sensor 521 may also be located (additionally or alternatively) at the other end of the spool 550, i.e. close to the flange 570.

As can be seen in Fig. 8, the sensor 421 is arranged at the inside side of the flange 560 facing the spool body 580. According to some embodiments, the position of the sensor or sensors of the sensor arrangement of a wire saw device may be chosen according to the type of sensor used, the structural environment of the wire saw, the spool type used and the like. The position of the sensor inside the spool should therefore not be understood as being limited to a laser sensor or other features specifically shown in the figures.

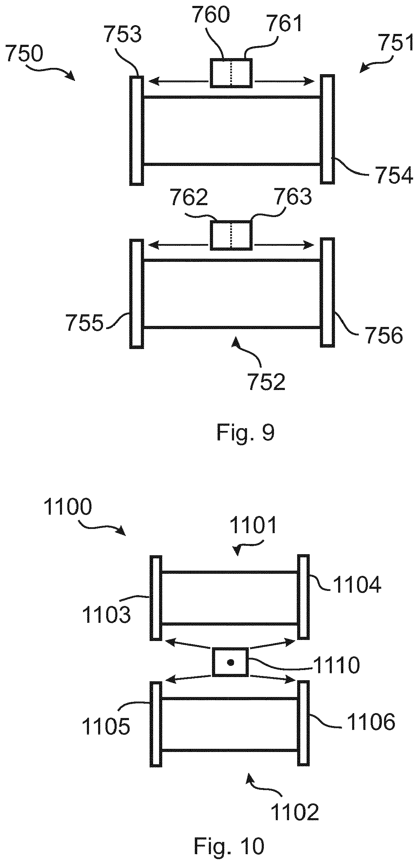

Fig. 9 shows an example of a spool arrangement equipped with a sensor arrangement used in a wire saw device according to embodiments described herein. The spool arrangement 750 of Fig. 9 shows two spools 751 and 752, which may be mounted to a spool reception arrangement for a wire saw device according to embodiment described herein. The spool 751 includes flanges 753 and 754, the spool 752 includes flanges 755 and 756. The sensor arrangement as shown in Fig. 9 further includes four sensors 760, 761, 762, and 763. According to some embodiments, the sensors are positioned and arranged above the spool body (e.g. at the middle position between the two flanges) and are positioned and configured for measuring the distance to the flanges. For instance, sensor 760 measures the internal distance to the flange 753, sensor 761 measures the internal distance to flange 754, sensor 721 measures the internal distance to flange 755, and sensor 763 measures the internal distance to flange 756. The internal distance as described herein refers to the distance of the sensor to an inside side of a flange, i.e. a side of the flange facing the spool body.

According to some embodiments, the sensors 760, 761, 762, and 763 may be adapted for measuring the flange deformation of the flanges 753, 754, 755, and 756. Further, although shown in an embodiment with two spools, the sensor arrangement and/or sensors described in Fig. 9 may be used in other configurations, too, such as configurations for measuring only one spool or more than two spools.

As exemplarily shown in Fig. 9, the sensors 760, 761 for measuring the flange distance or deformation of the flanges of spool 751, and the sensors 762 and 763 for measuring the flange distance or deformation of the flanges of the spool 752 may be mounted together, or share a common housing for the sake of an easy assembly. However, it should be understood that the common housing of the sensors is only an example; the sensors 760, 761, 762, and 763 may also be mounted in a single way, each on its own.

Fig. 10 shows an embodiment of a spool arrangement 1100. The spool arrangement 1100 may be mounted to a spool reception arrangement of a wire saw device according to embodiments described herein. The spool arrangement 1100 includes two spools 1101 and 1102, each having two flanges 1103, 1104 and 1105, 1106, respectively. The embodiment of a spool arrangement shown in Fig. 10 is further equipped with a sensor arrangement 1110 according to embodiments described herein. The sensor arrangement 1110 may be a rotatable sensor arrangement for measuring the distances to the flanges 1103, 1104, 1105, and 1106, as indicated by the arrows pointing to the respective flanges. In one example, the sensor arrangement 1110 is a laser sensor arrangement. According to some embodiments, the sensor arrangement 1110 may be adapted and positioned to measure the distance to the flanges 1103, 1104, 1105, and 1106 by four rotations.

Generally, the sensor arrangement 1110 may also be adapted for measuring the deformation of the single flanges by staying in one position for measuring one flange condition of one flange of the flanges 1103, 1104, 1105, and 1106 as long as necessary for obtaining the desired information. Then, the sensor arrangement 1110 may be rotated to a position for measuring a flange condition of the next flange of flanges 1103, 1104, 1105, and 1106. Further, although shown in an embodiment with two spools, the sensor arrangement and/or sensors described in Fig. 10 may be used in other configurations, too, such as configurations for measuring only one spool or more than two spools.

Fig. 11 shows a schematic drawing of a wire saw device 800, in which a sensor arrangement as described herein, may be used. In Fig. 11, some examples of operation conditions of a spool flange (such as distances) are shown, which may be measured by the sensor arrangement of the wire saw device as described in embodiments herein. Fig. 11 shows a spool 850 having two flanges 860 and 870. The spool may be mounted to a spool reception (only bearing 816 of the spool reception is shown in Fig. 11). The spool reception may be connected to a machine housing 817. For the sake of a better overview, the sensor arrangement of the wire saw device 800 is not shown in Fig. 11. However, the wire saw device 800 may include a sensor arrangement as described with respect to Figs. 2 to 10 and 12 to 13.

According to some embodiments, the distance of the wire saw device, which may be measured by the sensor arrangement as described herein, may be the distance 810 between the flange 860 and the flange 870. In one embodiment, the distance 810 is measured at the inside side of the flanges 860 and 870 (facing the spool body 880), e.g. by using a laser sensor. However, the measurement of the distance between the two flanges of a spool may be performed at the outside side of the flanges (not facing the spool body 880), e.g. by using a sensor arrangement including two proximity sensors.

In some embodiments, the distance of the wire saw device, which may be measured by the sensor arrangement as described herein, may be the distance 820 between the flange 860 and the bearing 817 of the spool reception. For instance, the distance 820 may be measured by a laser sensor or a proximity sensor. In one embodiment, the distance 820 may be the distance between a flange of the spool (such as one of the flanges 860 or 870) and a surface of the bearing 816, in particular a surface of the bearing 816 being substantially parallel to the flange of the spool. In the embodiment shown in Fig. 11, the distance 820 is measured from an outside side 860 of the flange to the bearing; however, the distance 820 may also be measured from the inside side of the flange.

In Fig. 11, a further example of an operational parameter in the wire saw device can be seen as distance 830. The distance 830 extends from a flange of the spool (here exemplarily flange 860) to the machine housing 817 of the wire saw device 800. Again, although the distance 830 is shown as extending from the outside side of the flange 860, the distance 830 may also be measured from the inside side of the flange 860, or from flange 870. As mentioned above, a laser sensor or a proximity sensor may be used for performing the measurement of distance 830.

Section A shows a detailed view of the flange 860 of spool 850. According to some embodiments, the operational parameter measured by the herein described sensor arrangement may be a deformation 840. The deformation 840 is exemplarily shown as a bending of the flange border. The deformation in the example shown in section A of Fig. 11 includes a deviation of the flange shape by an angle 841. Although only shown for flange 860, the deformation of flange 870 may also be measured by the herein described sensor arrangement as operation condition of the flanges. It should be noted that the skilled person will understand how to modify the shown example so as to apply the measurement to the deformation of spool 870, or to deformations having a different shape or position than the example deformation 840 shown in Fig. 11.

Fig. 12 shows a wire saw device according to embodiments described herein. The wire saw device 600 shown in Fig. 12 includes a first spool reception arrangement, of which only bearing 616 can be seen in Fig. 12. The wire saw device 600 further includes a second spool reception arrangement, of which only bearing 618 can be seen in Fig. 12. The first and the second spool reception arrangement may be connected to a machine body 617. In one embodiment, the first spool reception arrangement is adapted for holding and supporting a first spool 650, and the second spool reception arrangement is adapted for holding and supporting a second spool 651. According to some embodiments, the first spool 650 may be a feeding spool providing the wire for the wire saw device, and the second spool 651 may be a take up spool for taking up the used wire after the sawing process.

According to some embodiments, the wire saw device 600 includes a sensor arrangement 620. In the embodiment shown in Fig. 12, the sensor arrangement 620 includes a first sensor 621 for measuring an operation condition of a flange 660 of the first spool 650, a first reference sensor 626 for providing a reference for the measurement of the first sensor 621, a second sensor 622 for measuring an operation condition of a flange 661 of the second spool 651 and a second reference sensor 627 for providing a reference for the measurement of the second sensor 622. According to some embodiments, which may be combined with further embodiments, the distance 623, between the first sensor 621 and the second sensor 622 of the sensor arrangement in a direction substantially perpendicular to the measuring direction of the sensors, may be in the range of typically between about 100 mm and about 300 mm, more typically between about 150 mm and about 280 mm, and even more typically between about 180 mm and about 250 mm.

Fig. 13 shows a front view of the wire saw device 600 of Fig. 12. In the front view of Fig. 13, it can be seen that the sensors 621 and 622 are mounted to a support 628, which is again connected to an arm 625. The arm 625 may be used as a moving unit. The reference sensors 626 and 627 are mounted to the bearings 616 and 618, respectively. The arrangement of the sensors shown in the embodiment of Figs. 12 and 13 allows for the simultaneous measurement of more than one spool in a wire saw device. For instance, the operation condition of the flanges of a feeding spool and a take up spool may be measured simultaneously. In particular, the operation condition of the flanges of a feeding spool and a take up spool may be measured simultaneously during operation of the wire saw device. However, in other embodiments, the measurement of the operation condition of more than one spool may be performed separately.

According to some embodiments, which may be combined with other embodiments, the arm, on which the sensors of the sensor arrangement are provided, may be a moving unit, such as a retractable arm. In one embodiment, the retractable arm carries at least one sensor of the sensor arrangement.

By providing a sensor of the sensor arrangement on a moving unit, the sensor may be moved to and removed from the spool flange during operation. According to some embodiments, the retractable arm carrying a sensor of the sensor arrangement may be moved to the spool flange during a slow-down phase during the operation of the wire saw. For instance, the velocity of rotation of the spool may be decreased and the sawing process is shortly suspended or postponed so that the measurement of the operating condition of the flange may be measured by moving a sensor in front of the respective spool flange. After the measurement, the moving unit may be removed or retracted from the spool flange so as not to disturb the winding and unwinding process.

In one embodiment, the retractable arm may include a bellow, which is able to extend and retract, e.g. by a pneumatic mechanism. The bellow-like structure of the retractable arm 625 in Fig. 13 is shown by vertical lines. According to some embodiments, which may be combined with other embodiments described herein, the retractable arm may be compressed in order to move the sensors in a direction away from the flanges. The bellow-like structure of the retractable arm may be made of a flexible material, which may be folded along the vertical lines, when the retractable arm 625 is retracted. The flexible material of the bellow-like structure may be able to unfold when the retractable arm 625 is extended. In one embodiment, the retractable arm may be extendable and retractable in a range of typically between about 100 mm to about 300 mm, more typically between about 150 mm and about 280 mm, even more typically between about 200 mm and 250 mm. In one example, the retractable arm may be extendable and retractable by about 230 mm.

According to some embodiments, the length of the retractable arm (such as, in Fig. 13, the length 624 of the arm 625) may be in the range of typically about 200 mm to about 600 mm, more typically between about 250 mm and about 500 mm, and even more typically between about 300 mm and about 500 mm. In one example, the length of the retractable arm is about 420 mm.

It should be noted that values described above with respect to dimensions of elements described in embodiments herein may depend on the size of the wire saw. Thus, the above dimensions and values are not limiting and may vary dependent on the wire saw, in which the wire saw device according to embodiments described herein may be used.

Fig. 14 shows a schematic view of a wire saw device according to embodiments described herein. The wire saw device 900 exemplarily includes a first spool 901, which may for instance be a feeding spool for feeding a wire 903 for the wire saw system 900. The wire 903 is guided by wire guides 904 and 905 and passes a processing region, in which an ingot 906 may be processed. The processing of the ingot 906 may include cutting the ingot in wafers or thin slices as described before. After having passed the processing region, the wire 906 is guided by the wire guides 904 and 905 to the second spool 902, which may be a take up spool for receiving the wire after the cutting process.

According to some embodiments, the wire saw device 900 includes a spool reception arrangement and a sensor arrangement as described in embodiments herein. For instance, the spools 901 and 902 may be mounted to a spool reception arrangement as described above. In Fig. 14, the spool reception arrangement is not shown due to the fact that spools are shown in a mounted state in Fig. 14.

Generally, an operation condition of the flanges of the spools 901 and 902 may be measured by a sensor arrangement as described above. In Fig. 14, a sensor arrangement including sensors 910 and 911 is exemplarily shown. The sensors 910, 911 may be adapted to measure the internal distance of the flanges of the spools 901 and 902. Although a sensor arrangement with two sensors 910, 911 is shown in Fig. 14, other sensor arrangements according to embodiments described herein may be used in the wire saw device 900, such as sensor arrangements as shown in Figs. 3 to 10 and 12 to 13.

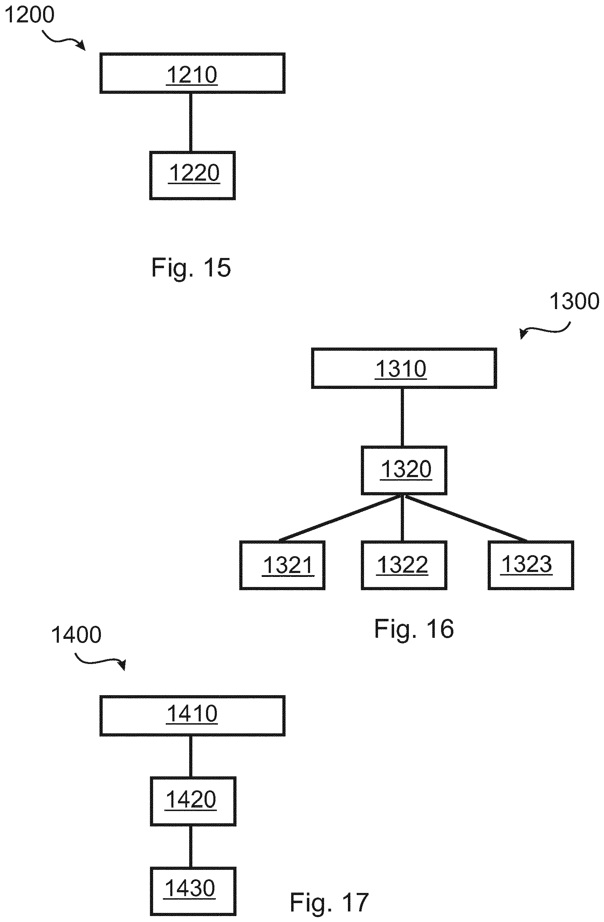

Fig. 15 shows a flowchart of a method 1200 for measuring the operation condition of a wire saw device according to some embodiments. According to some embodiments, the wire saw device, from which the operating conditions are to be measured, may be a wire saw device as described above. For instance, in box 1210, the wire saw device includes a spool reception arrangement for receiving a spool, which includes one flange at each end of the spool. The method 1200 includes in box 1220 measuring the operation condition of at least one of the spool flanges by a sensor arrangement. The sensor arrangement used for measuring the operation condition of the flange may for instance be a sensor arrangement as described above with respect to Figs. 1 to 13 and may include one or more proximity sensors or laser sensors as described above.

Fig. 16 shows a flowchart 1300 of a method for measuring the operation condition of a wire saw device according to some embodiments. The method 1300 includes boxes 1310 and 1320, which may be the same as boxes 1210 and 1220 described above. In method 1300, measuring the operation condition of at least one of the spool flanges in box 1320 may include at least one of three boxes 1321, 1322, and 1323. According to some embodiments, box 1321 includes measuring the distance between a flange of the spool and a surface of the spool reception arrangement (such as the spool reception arrangement described above with respect to Fig. 2). In one embodiment, the distance between a flange of the spool and a surface of the spool reception arrangement being substantially parallel to the flange may exemplarily be measured. In box 1322, the distance between the two spool flanges of one spool may be measured. In box 1323, the deformation of one of the spool flanges is measured, in particular, the deformation of the flange is measured by measuring the distance of the sensor to the flange over the whole circumference of the flange.

According to some embodiments, measuring the operation condition of a spool flange includes moving the sensor arrangement to the spool flange for measuring the operation condition of the spool flange. For instance the sensor arrangement may be moved by a moving unit to the flange, such as a moving unit or a retractable arm as described above with respect to the wire saw device. In one embodiment, the moving unit moves the sensor arrangement close to the flange. The exact distance from the sensor to the flange may depend on the sensor used and the size and the material of the flange. In particular, the sensor arrangement is moved towards the flange for measuring the operation condition of the spool flange in a contactless manner. For instance, the sensor may be, as described above, an proximity sensor, or a laser sensor or any type of distance sensor allowing the distance to the flange to be measured in a contactless manner.

In one embodiment, measuring the operation condition of the spool flange(s) may be performed during the operation of the wire saw. For instance, the moving unit carrying at least a part of the sensor arrangement is driven (such as by a pneumatic mechanism) so as to place the sensor close to the spool flange, whose operational condition is to be measured. Moving the part of the sensor arrangement carried by the moving unit to the flange may be performed during operation of the wire saw device or during a slow-down phase during the operation of the wire saw. In this way, the sensor arrangement may be provided on demand, if a measurement is required or the control unit indicates the expiry of a predefined time period after which a measurement of the operational condition of the spool flange is due.

Fig. 17 shows a flow chart 1400 of a method for operating a wire saw device. According to some embodiments, the wire saw device may be a wire saw device as described above with respect to the Figs. 1 to 13, which is indicated by box 1410. In one embodiment, the method 1400 includes in box 1420 providing a wire for sawing a semiconductor work piece from a spool. The spool generally includes a spool flange at each end of the spool. In box 1430, the method 1400 includes measuring the operation condition of at least one of the spool flanges, for instance, as described above, by using a sensor arrangement. The sensor arrangement may be a sensor arrangement as described above with respect to the method for measuring an operation condition of a wire saw or with respect to the wire saw device.

The wire saw device as described herein may be used in a variety of different wire saw technologies, such as wire saws using slurry or diamond technology, or a back and forth mode.

By using the wire saw device according to the invention, not only the distance between the flanges or the distance between the flange and the machine body may be detected, but also the sources of any errors during the wire saw operation may be detected. For instance, sliding of the spool on the spool reception, a deformation of the flange, or a wrong type of spool being installed may be detected.

While the foregoing is directed to embodiments of the invention, other embodiments may be devised without departing from the scope of the claims.

## Claims

1. A wire saw device (200; 300; 400; 500; 600) for sawing a semiconductor work piece (102; 104; 106; 108), the wire saw device comprising:
a spool reception arrangement (210; 310; 410; 510) for receiving a spool (250; 350; 450; 550; 650; 651), said the spool including a spool flange (260, 270; 360, 370; 460; 470; 560, 570; 660, 670; 661; 671) at each end of the spool; and
a sensor arrangement (220; 320; 420; 520; 620) for measuring an operation condition of at least one of the spool flanges (260, 270; 360, 370; 460; 470; 560, 570; 660, 670; 661; 671), **characterized in that**
the sensor arrangement (220; 320; 420; 520; 620) is configured for measuring the operation condition comprising at least one of the group consisting of: the distance between at least one of the flanges (260, 270; 360, 370; 460; 470; 560, 570; 660, 670; 661; 671) of the spool (250; 350; 450; 550; 650; 651) and a surface (216; 316; 416; 516; 616; 618) of the spool reception arrangement (210; 310; 410; 510), the distance between the two flanges (260, 270; 360, 370; 460; 470; 560, 570; 660, 670; 661; 671) of one spool (250; 350; 450; 550; 650; 651), and the deformation of at least one of the spool flanges (260, 270; 360, 370; 460; 470; 560, 570; 660, 670; 661; 671).

2. The wire saw device according to claim 1, wherein the wire saw device (200; 300; 400; 500; 600) further comprises a moving unit (325; 625), in particular a retractable arm, and wherein at least a part of the sensor arrangement (320; 620) is mounted to the moving unit.

3. The wire saw device according to any of claims 1 to 2, wherein the sensor arrangement (220; 320; 420; 520; 620) is configured for measuring at least one of the shape and the position of at least one of the spool flanges (260, 270; 360, 370; 460; 470; 560, 570; 660, 670; 661; 671).

4. The wire saw device according to any of claims 1 to 3, wherein the spool reception arrangement comprises a first spool reception for receiving a feeding spool (650) for providing a wire and a second spool reception for receiving a take up spool (651) for receiving the wire, and wherein the sensor arrangement (220; 320; 420; 520; 620) is configured for measuring the operation condition of at least one of the spool flanges (660; 670) of the feeding spool (650) and the operation condition of at least one of the spool flanges (661; 671) of the take up spool (651).

5. The wire saw device according to claim 4, wherein the sensor arrangement (220; 320; 420; 520; 620) comprises at least one sensor (621; 626) adapted for measuring the operation condition of the feeding spool (650) and at least one sensor (622; 627) for measuring the operation condition of the take up spool (651).

6. The wire saw device according to claim 5, if dependent on claim 2, wherein one sensor (621) for the feeding spool (650) and one sensor (622) for the take up spool (651) are mounted to the moving unit (625).

7. The wire saw device according to any of claims 1 to 6, wherein the wire saw device (200; 300; 400; 500; 600) comprises a machine body (217; 317; 417; 517; 617) configured for providing the spool reception (210; 310; 410; 510) and wherein the sensor arrangement (220; 320; 420; 520; 620) comprises a reference sensor device at least at one of the machine body and the spool reception arrangement.

8. The wire saw device according to any of claims 2 to 6, wherein the wire saw device (200; 300; 400; 500; 600) comprises a machine body (217; 317; 417; 517; 617) configured for providing the spool reception (210; 310; 410; 510), wherein the sensor arrangement (220; 320; 420; 520; 620) comprises a reference sensor device at the machine body and a sensor device mounted to the moving unit.

9. The wire saw device according to any of claims 1 to 8, wherein the sensor arrangement (220; 320; 420; 520; 620) comprises at least one of a proximity sensor, a laser sensor and a rotatable sensor (1110).

10. A method (1200) for measuring the operation condition of a wire saw device (200; 300; 400; 500; 600) for sawing a semiconductor work piece (102; 104; 106; 108), the wire saw device comprising a spool reception arrangement (210; 310; 410; 510) for receiving a spool (250; 350; 450; 550; 650; 651), said spool comprising one flange (260, 270; 360, 370; 460; 470; 560, 570; 660, 670; 661; 671) at each end of the spool, the method comprising:
measuring (1220) an operation condition of at least one of the spool flanges by a sensor arrangement (220; 320; 420; 520; 620), **characterized in that** measuring the operation condition of at least one of the spool flanges (260, 270; 360, 370; 460; 470; 560, 570; 660,670; 661; 671) comprises at least one of measuring the distance between at least one of the flanges (260, 270; 360, 370; 460; 470; 560, 570; 660, 670; 661; 671) of the spool (250; 350; 450; 550; 650; 651) and a surface (216; 316; 416; 516; 616; 618) of the spool reception arrangement (210; 310; 410; 510), measuring the distance between the spool flanges (260, 270; 360, 370; 460; 470; 560, 570; 660, 670; 661; 671) of one spool (250; 350; 450; 550; 650; 651), and measuring the deformation of one of the spool flanges (260, 270; 360, 370; 460; 470; 560, 570; 660, 670; 661; 671).

11. The method according to claim 10, wherein measuring the operation condition of at least one of the spool flanges comprises moving at least a part of the sensor arrangement to the spool flange (260, 270; 360, 370; 460; 470; 560, 570; 660, 670; 661; 671) for measuring the operation condition of the spool flange, in particular for measuring the operation condition of the spool flange in a contactless manner.

12. The method according to claim 10 or 11, wherein measuring the operation condition of at least one of the spool flanges (260, 270; 360, 370; 460; 470; 560, 570; 660, 670; 661; 671) is performed during the operation of the wire saw, in particular during a slow-down phase during the operation of the wire saw.

13. A method for operating a wire saw device (200; 300; 400; 500; 600) for sawing a semiconductor work piece (102; 104; 106; 108), the method comprising:
providing a wire for sawing the semiconductor work piece from a spool (250; 350; 450; 550; 650; 651), wherein the spool includes a spool flange (260, 270; 360, 370; 460; 470; 560, 570; 660, 670; 661; 671) at each end of the spool;
measuring the operation condition of at least one of the spool flanges (260, 270; 360, 370; 460; 470; 560, 570; 660, 670; 661; 671) according to any of claims 10 to 12.

## Patentansprüche

1. Drahtsägenvorrichtung (200; 300; 400; 500; 600) zum Sägen eines Halbleiterwerkstücks (102; 104; 106; 108), wobei die Drahtsägenvorrichtung Folgendes umfasst:
eine Spulenaufnahmeanordnung (210; 310; 410; 510) zum Aufnehmen einer Spule (250; 350; 450; 550; 650; 651), wobei die Spule an beiden Enden der Spule jeweils einen Spulenflansch (260, 270; 360, 370; 460; 470; 560, 570; 660, 670; 661; 671) aufweist; und
eine Sensoranordnung (220; 320; 420; 520; 620) zum Messen eines Betriebszustandes an mindestens einem der Spulenflansche (260, 270; 360, 370; 460; 470; 560, 570; 660, 670; 661; 671),
**dadurch gekennzeichnet,**
**dass** die Sensoranordnung (220; 320; 420; 520; 620) zum Messen des Betriebszustandes ausgebildet ist, welcher mindestens einen der folgenden Betriebszustände umfasst: den Abstand zwischen mindestens einem der Flansche (260, 270; 360, 370; 460; 470; 560, 570; 660, 670; 661; 671) der Spule (250; 350; 450; 550; 650; 651) und einer Fläche (216; 316; 416; 516; 616; 618) der Spulenaufnahmeanordnung (210; 310; 410; 510), den Abstand zwischen den beiden Flanschen (260, 270; 360, 370; 460; 470; 560, 570; 660, 670; 661; 671) einer Spule (250; 350; 450; 550; 650; 651) und die Verformung von mindestens einem der Spulenflansche (260, 270; 360, 370; 460; 470; 560, 570; 660, 670; 661; 671).

2. Drahtsägenvorrichtung nach Anspruch 1, wobei die Drahtsägenvorrichtung (200; 300; 400; 500; 600) des Weiteren eine Bewegungseinheit (325; 625), insbesondere einen zurückziehbaren Arm umfasst und wobei zumindest ein Teil der Sensoranordnung (320; 620) an der Bewegungseinheit gelagert ist.

3. Drahtsägenvorrichtung nach einem der Ansprüche 1 bis 2, wobei die Sensoranordnung (220; 320; 420; 520; 620) zum Messen der Form und/oder der Position von mindestens einem der Spulenflansche (260, 270; 360, 370; 460; 470; 560, 570; 660, 670; 661; 671) ausgebildet ist.

4. Drahtsägenvorrichtung nach einem der Ansprüche 1 bis 3, wobei die Spulenaufnahmeanordnung eine erste Spulenaufnahme zum Aufnehmen einer Abrollspule (650) zur Bereitstellung eines Drahtes und eine zweite Spulenaufnahme zum Aufnehmen einer Aufrollspule (651) zum Aufnehmen des Drahtes umfasst und wobei die Sensoranordnung (220; 320; 420; 520; 620) zum Messen des Betriebszustandes von mindestens einem der Spulenflansche (660; 670) der Abrollspule (650) und des Betriebszustandes von mindestens einem der Spulenflansche (661; 671) der Aufrollspule (651) ausgebildet ist.

5. Drahtsägenvorrichtung nach Anspruch 4, wobei die Sensoranordnung (220; 320; 420; 520; 620) mindestens einen zum Messen des Betriebszustandes der Abrollspule (650) ausgebildeten Sensor (621; 626) und mindestens einen zum Messen des Betriebszustandes der Aufrollspule (651) ausgebildeten Sensor (622; 627) umfasst.

6. Drahtsägenvorrichtung nach Anspruch 5, wenn in Abhängigkeit von Anspruch 2, wobei ein Sensor (621) für die Abrollspule (650) und ein Sensor (622) für die Aufrollspule (651) an der Bewegungseinheit gelagert sind (625).

7. Drahtsägenvorrichtung nach einem der Ansprüche 1 bis 6, wobei die Drahtsägenvorrichtung (200; 300; 400; 500; 600) einen Maschinenkörper (217; 317; 417; 517; 617) umfasst, der zum Bereitstellen der Spulenaufnahme (210; 310; 410; 510) ausgebildet ist, und wobei die Sensoranordnung (220; 320; 420; 520; 620) eine Referenzsensorvorrichtung an dem Maschinenkörper und/oder der Spulenaufnahmeanordnung umfasst.

8. Drahtsägenvorrichtung nach einem der Ansprüche 2 bis 6, wobei die Drahtsägenvorrichtung (200; 300; 400; 500; 600) einen Maschinenkörper (217; 317; 417; 517; 617) umfasst, der zum Bereitstellen der Spulenaufnahme (210; 310; 410; 510) ausgebildet ist, wobei die Sensoranordnung (220; 320; 420; 520; 620) eine Referenzsensorvorrichtung an dem Maschinenkörper und eine an der Bewegungseinheit gelagerte Sensorvorrichtung umfasst.

9. Drahtsägenvorrichtung nach einem der Ansprüche 1 bis 8, wobei die Sensoranordnung (220; 320; 420; 520; 620) einen Näherungssensor, einen Lasersensor und/oder einen drehbaren Sensor (1110) umfasst.

10. Verfahren (1200) zum Messen des Betriebszustandes einer Drahtsägenvorrichtung (200; 300; 400; 500; 600) zum Sägen eines Halbleiterwerkstücks (102; 104; 106; 108), wobei die Drahtsägenvorrichtung eine Spulenaufnahmeanordnung (210; 310; 410; 510) zum Aufnehmen einer Spule (250; 350; 450; 550; 650; 651) umfasst, wobei die Spule an beiden Enden der Spule jeweils einen Flansch (260, 270; 360, 370; 460; 470; 560, 570; 660, 670; 661; 671) umfasst, wobei das Verfahren folgende Schritte umfasst:
Messen (1220) eines Betriebszustandes von mindestens einem der Spulenflansche mittels einer Sensoranordnung (220; 320; 420; 520; 620),
**dadurch gekennzeichnet,**
**dass** das Messen des Betriebszustandes von mindestens einem der Spulenflansche (260, 270; 360, 370; 460; 470; 560, 570; 660,670; 661; 671) ein Messen des Abstands zwischen mindestens einem der Flansche (260, 270; 360, 370; 460; 470; 560, 570; 660, 670; 661; 671) der Spule (250; 350; 450; 550; 650; 651) und einer Fläche (216; 316; 416; 516; 616; 618) der Spulenaufnahmeanordnung (210; 310; 410; 510), ein Messen des Abstands zwischen den Spulenflanschen (260, 270; 360, 370; 460; 470; 560, 570; 660, 670; 661; 671) einer Spule (250; 350; 450; 550; 650; 651) und/oder ein Messen der Verformung von einem der Spulenflansche (260, 270; 360, 370; 460; 470; 560, 570; 660, 670; 661; 671) umfasst.

11. Verfahren nach Anspruch 10, wobei das Messen des Betriebszustandes von mindestens einem der Spulenflansche das Bewegen von zumindest einem Teil der Sensoranordnung zu dem Spulenflansch (260, 270; 360, 370; 460; 470; 560, 570; 660, 670; 661; 671) zum Messen des Betriebszustandes des Spulenflansches, insbesondere zum berührungslosen Messen des Betriebszustandes des Spulenflansches umfasst.

12. Verfahren nach Anspruch 10 oder 11, wobei das Messen des Betriebszustandes von mindestens einem der Spulenflansche (260, 270; 360, 370; 460; 470; 560, 570; 660, 670; 661; 671) während des Betriebs der Drahtsäge, insbesondere während einer Verlangsamungsphase während des Betriebs der Drahtsäge durchgeführt wird.

13. Verfahren zum Betrieb einer Drahtsägenvorrichtung (200; 300; 400; 500; 600) zum Sägen eines Halbleiterwerkstücks (102; 104; 106; 108), wobei das Verfahren folgende Schritte umfasst:
Bereitstellen eines Drahts zum Sägen des Halbleiterwerkstückes von einer Spule (250; 350; 450; 550; 650; 651), wobei die Spule an beiden Seiten der Spule jeweils (260, 270; 360, 370; 460; 470; 560, 570; 660, 670; 661; 671) einen Spulenflansch umfasst; und
Messen des Betriebszustandes von mindestens einem der Spulenflansche (260, 270; 360, 370; 460; 470; 560, 570; 660, 670; 661; 671) nach einem der Ansprüche 10 bis 12.

## Revendications

1. Dispositif de scie à fil (200 ; 300 ; 400 ; 500 ; 600) destiné à scier une pièce à usiner semi-conductrice (102 ; 104 ; 106 ; 108), le dispositif de scie à fil comprenant :
un agencement de réception de bobine (210 ; 310 ; 410 ; 510) destiné à recevoir une bobine (250 ; 350 ; 450 ; 550 ; 650 ; 651), ladite bobine comportant une flasque de bobine (260, 270 ; 360, 370 ; 460 ; 470 ; 560, 570 ; 660, 670 ; 661 ; 671) à chaque extrémité de la bobine ; et
un agencement de capteur (220 ; 320 ; 420 ; 520 ; 620) destiné à mesurer une condition de fonctionnement d'au moins une des flasques de bobine (260, 270 ; 360, 370 ; 460 ; 470 ; 560, 570 ; 660, 670 ; 661 ; 671),
**caractérisé en ce que**
l'agencement de capteur (220 ; 320 ; 420 ; 520 ; 620) est configuré pour mesurer la condition de fonctionnement comprenant au moins une dans le groupe consistant à : la distance entre au moins une des flasques (260, 270 ; 360, 370 ; 460 ; 470 ; 560, 570 ; 660, 670 ; 661 ; 671) de la bobine (250 ; 350 ; 450 ; 550 ; 650 ; 651) et une surface (216 ; 316 ; 416 ; 516 ; 616 ; 618) de l'agencement de réception de bobine (210 ; 310 ; 410 ; 510), la distance entre les deux flasques (260, 270 ; 360, 370 ; 460 ; 470 ; 560, 570 ; 660, 670 ; 661 ; 671) d'une bobine (250 ; 350 ; 450 ; 550 ; 650 ; 651) et la déformation d'au moins une des flasques de bobine (260, 270 ; 360, 370 ; 460 ; 470 ; 560, 570 ; 660, 670 ; 661 ; 671).

2. Dispositif de scie à fil selon la revendication 1, dans lequel le dispositif de scie à fil (200 ; 300 ; 400 ; 500 ; 600) comprend en outre une unité de déplacement (325 ; 625), notamment un bras rétractable, et dans lequel au moins une partie de l'agencement de capteur (320 ; 620) est montée sur l'unité de déplacement.

3. Dispositif de scie à fil selon l'une quelconque des revendications 1 à 2, dans lequel l'agencement de capteur (220 ; 320 ; 420 ; 520 ; 620) est configuré pur mesurer au moins une parmi la forme et la position d'au moins une des flasques de bobine (260, 270 ; 360, 370 ; 460 ; 470 ; 560, 570 ; 660, 670 ; 661 ; 671).

4. Dispositif de scie à fil selon l'une quelconque des revendications 1 à 3, dans lequel l'agencement de réception de bobine comprend un premier moyen de réception destiné à recevoir une bobine de déroulement (650) destinée à fournir un fil et un deuxième moyen de réception destiné à recevoir une bobine d'enroulement (651) destinée à recevoir le fil, et dans lequel l'agencement de capteur (220 ; 320 ; 420 ; 520 ; 620) est configuré pour mesurer la condition de fonctionnement d'au moins une des flasques de bobine (660 ; 670) de la bobine de déroulement (650) et la condition de fonctionnement d'au moins une des flasques de bobine (661 ; 671) de la bobine d'enroulement (651).

5. Dispositif de scie à fil selon la revendication 4, dans lequel l'agencement de capteur (220 ; 320 ; 420 ; 520 ; 620) comprend au moins un capteur (621 ; 626) adapté pour mesurer la condition de fonctionnement de la bobine de déroulement (650) et au moins un capteur (622 ; 627) destiné à mesurer la condition de fonctionnement de la bobine d'enroulement (651).

6. Dispositif de scie à fil selon la revendication 5, si dépendant de la revendication 2, dans lequel un capteur (621) pour la bobine de déroulement (650) et un capteur (622) pour la bobine d'enroulement (651) sont montés sur l'unité de déplacement (625).

7. Dispositif de scie à fil selon l'une quelconque des revendications 1 à 6, dans lequel le dispositif de scie à fil (200 ; 300 ; 400 ; 500 ; 600) comprend un corps de machine (217 ; 317 ; 417 ; 517 ; 617) configuré pour fournir le moyen de réception de bobine (210 ; 310 ; 410 ; 510) et dans lequel l'agencement de capteur (220 ; 320 ; 420 ; 520 ; 620) comprend un dispositif capteur de référence sur au moins un parmi le corps de machine et l'agencement de réception de bobine.

8. Dispositif de scie à fil selon l'une quelconque des revendications 2 à 6, dans lequel le dispositif de scie à fil (200 ; 300 ; 400 ; 500 ; 600) comprend un corps de machine (217 ; 317 ; 417 ; 517 ; 617) configuré pour fournir le moyen de réception de bobine (210 ; 310 ; 410 ; 510), dans lequel l'agencement de capteur (220 ; 320 ; 420 ; 520 ; 620) comprend un dispositif capteur de référence sur le corps de machine et un dispositif capteur monté sur l'unité de déplacement.

9. Dispositif de scie à fil selon l'une quelconque des revendications 1 à 8, dans lequel l'agencement de capteur (220 ; 320 ; 420 ; 520 ; 620) comprend au moins un parmi un capteur de proximité, un capteur laser et un capteur rotatif (1110).

10. Procédé (1200) pour mesurer la condition de fonctionnement d'un dispositif de scie à fil (200 ; 300 ; 400 ; 500 ; 600) destiné à scier une pièce à usiner semi-conductrice (102 ; 104 ; 106 ; 108), le dispositif de scie à fil comprenant un agencement de réception de bobine (210 ; 310 ; 410 ; 510) destiné à recevoir une bobine (250 ; 350 ; 450 ; 550 ; 650 ; 651), ladite bobine comprenant une flasque (260, 270 ; 360, 370 ; 460 ; 470 ; 560, 570 ; 660, 670 ; 661 ; 671) à chaque extrémité de la bobine, le procédé comprenant les étapes consistant à :
mesurer (1220) une condition de fonctionnement d'au moins une des flasques de bobine par un agencement de capteur (220 ; 320 ; 420 ; 520 ; 620),
**caractérisé en ce que**
l'étape de mesurer la condition de fonctionnement d'au moins une des flasques de bobine (260, 270 ; 360, 370 ; 460 ; 470 ; 560, 570 ; 660,670 ; 661 ; 671) comprend au moins une des étapes consistant à mesurer la distance entre au moins une des flasques (260, 270 ; 360, 370 ; 460 ; 470 ; 560, 570 ; 660, 670 ; 661 ; 671) de la bobine (250 ; 350 ; 450 ; 550 ; 650 ; 651) et une surface (216 ; 316 ; 416 ; 516 ; 616 ; 618) de l'agencement de réception de bobine (210 ; 310 ; 410 ; 510), mesurer la distance entre les flasques de bobine (260, 270 ; 360, 370 ; 460 ; 470 ; 560, 570 ; 660, 670 ; 661 ; 671) d'une bobine (250 ; 350 ; 450 ; 550 ; 650 ; 651) et mesurer la déformation d'une des flasques de bobine (260, 270 ; 360, 370 ; 460 ; 470 ; 560, 570; 660, 670 ; 661 ; 671).

11. Procédé selon la revendication 10, dans lequel l'étape de mesurer la condition de fonctionnement d'au moins une des flasques de bobine comprend l'étape de déplacer au moins une partie de l'agencement de capteur vers la flasque de bobine (260, 270 ; 360, 370 ; 460 ; 470 ; 560, 570 ; 660, 670 ; 661 ; 671) afin de mesurer la condition de fonctionnement de la flasque de bobine, notamment afin de mesurer la condition de fonctionnement de la flasque de bobine d'une manière sans contact.

12. Procédé selon la revendication 10 ou 11, dans lequel l'étape de mesurer la condition de fonctionnement d'au moins une des flasques de bobine (260, 270 ; 360, 370 ; 460 ; 470 ; 560, 570 ; 660, 670 ; 661 ; 671) est effectuer pendant le fonctionnement de la scie à fil, notamment pendant une phase de décélération pendant le fonctionnement de la scie à fil.

13. Procédé pour utiliser un dispositif de scie à fil (200 ; 300 ; 400 ; 500 ; 600) destiné à scier une pièce à usiner semi-conductrice (102 ; 104 ; 106 ; 108), le procédé comprenant les étapes consistant à :
fournir un fil destiné à scier la pièce à usiner semi-conductrice à partir d'une bobine (250 ; 350 ; 450 ; 550 ; 650 ; 651), dans lequel la bobine comprend une flasque de bobine (260, 270 ; 360, 370 ; 460 ; 470 ; 560, 570 ; 660, 670 ; 661 ; 671) à chaque extrémité de la bobine ; et
mesurer la condition de fonctionnement d'au moins une des flasques de bobine (260, 270 ; 360, 370 ; 460 ; 470 ; 560, 570 ; 660, 670 ; 661 ; 671) selon l'une quelconque des revendications 10 à 12.
